# EUROPEAN PATENT APPLICATION

(11) **EP 4 564 515 A1**
(43) Date of publication of application: **04.06.2025**
(21) Application number: 23846118.0
(22) Date of filing: 29.06.2023
(51) Int. Cl.: H01M 10/0587, H01M 4/36, H01M 4/38, H01M 4/58, H01M 10/052, H01M 50/586, H01M 50/595

(54) **NONAQUEOUS ELECTROLYTE SECONDARY BATTERY**

(30) Priority: 27.07.2022 JP 2022119832
(71) Applicant: Panasonic Intellectual Property Management Co., Ltd., Kadoma-shi, Osaka 571-0057 (JP)
(72) Inventor: INOUE, Kaoru, Kadoma-shi, Osaka 571-0057 (JP)
(74) Representative: Novagraaf International SA
(86) International application number: PCT/JP2023/024249
(87) International publication number: WO 2024/024385

(57) **Abstract**

A nonaqueous electrolyte secondary battery according to the present disclosure includes an electrode group including a positive electrode 5, a negative electrode 6, and a separator 7, the electrode group having a wound structure. The electrode group satisfies at least one configuration selected from the group consisting of the following (A) and (B): (A) the electrode group includes an insulating protective tape 9 at at least one end portion of the negative electrode 6 in the longitudinal direction of the negative electrode 6, the insulating protective tape 9 being adhered to a region 60 extending from a face of a negative electrode active material layer 6b facing the separator 7 to an exposed portion of a negative electrode current collector 6a via an end face of the negative electrode active material layer 6b; and (B) the electrode group includes an insulating protective tape in a region of the negative electrode 6 facing a positive electrode lead portion of the positive electrode 5, the insulating protective tape being adhered to the face of the negative electrode active material layer 6b facing the separator 7. The substrate of the protective tape 9 is a microporous resin-based membrane that has a compression deformation ratio of 30% or more and 50% or less when a load of 50 kg/cm² is applied thereto.

## Description

### TECHNICAL FIELD

The present disclosure relates to a nonaqueous electrolyte secondary battery.

### BACKGROUND ART

Nonaqueous electrolyte secondary batteries, such as lithium-ion secondary batteries, use an electrode group obtained, for example, by stacking a positive electrode and a negative electrode with a separator formed from a microporous resin-made membrane or the like disposed between the positive electrode and the negative electrode, and winding the resulting stack in a spiral form. Electrode groups having such a wound structure employ, for example, a configuration in which, to suppress short circuits in a portion where the applied pressure locally increases during winding, an insulating tape is disposed at the portion where the applied pressure increases, thereby preventing short circuits due to contact between the positive electrode and the negative electrode.

For example, Patent Literature 1 discloses a configuration in which, to provide a battery that is less susceptible to internal short circuits with the smallest possible increase in the thickness of the electrode group, an insulating tape is disposed at a position where a single point of insulation can prevent short circuits at multiple locations. Specifically, Patent Literature 1 discloses a battery including an electrode group in which: an insulating tape is adhered to the negative electrode, specifically to a portion facing the positive electrode in an exposed portion of the negative electrode core extending from the end portion of the portion coated with the negative electrode active material; and on the extension line connecting the winding center of the electrode group and the insulating tape, a positive electrode current collector tab is conductively connected to an exposed portion of the positive electrode core.

Patent Literature 2 discloses an electrode group having a wound structure in which the electrode plates forming the electrode group are each composed of a current collector, an active material layer, an electrode tab fixed to an uncoated portion, and an electrode thermal-insulating sheet adhered to the opposite face of the uncoated portion from the face to which the electrode tab is fixed. This electrode thermal-insulating sheet is composed of a composite material tape made of an organic material forming the matrix of the thermal-insulating sheet and an inorganic material dispersed in the organic material. This composite material tape is capable of maintaining thermal insulation and electrical insulation even at high temperatures owing to the inclusion of the inorganic material.

### CITATION LIST

### Patent Literature

Patent Literature 1: JP 4245429 B
Patent Literature 2: JP 4878800 B

### SUMMARY OF INVENTION

### Technical Problem

The present disclosure provides a nonaqueous electrolyte secondary battery that can reduce, in a portion of the electrode group where stress is concentrated, the probability of internal short circuits due to foreign matter mixed in the electrode group, and can also suppress metal deposition on the negative electrode.

### Solution to Problem

The present disclosure provides a nonaqueous electrolyte secondary battery including:
an electrode group including a positive electrode, a negative electrode, and a separator disposed between the positive electrode and the negative electrode, the electrode group having a wound structure; and
a nonaqueous electrolyte, wherein
the negative electrode includes a negative electrode current collector and a negative electrode active material layer,
the electrode group satisfies at least one configuration selected from the group consisting of the following (A) and (B):
   (A) the electrode group further includes an insulating protective tape at at least one end portion of the negative electrode in a longitudinal direction of the negative electrode, the insulating protective tape being adhered to a region extending from a face of the negative electrode active material layer facing the separator to an exposed portion of the negative electrode current collector via an end face of the negative electrode active material layer; and
   (B) the electrode group further includes an insulating protective tape in a region of the negative electrode facing a positive electrode lead portion of the positive electrode, the insulating protective tape being adhered to the face of the negative electrode active material layer facing the separator, and
a substrate of the protective tape is a microporous resin-based membrane that has a compression deformation ratio of 30% or more and 50% or less when a load of 50 kg/cm² is applied thereto.

### Advantageous Effects of Invention

According to the present disclosure, it is possible to provide a nonaqueous electrolyte secondary battery that can reduce, in a portion of the electrode group where stress is concentrated, the probability of internal short circuits due to foreign matter mixed in the electrode group, and can also suppress metal deposition on the negative electrode.

### BRIEF DESCRIPTION OF DRAWINGS

FIG. 1 is a cross-sectional view showing a nonaqueous electrolyte secondary battery according to an embodiment of the present disclosure.
FIG. 2A is a cross-sectional view showing an electrode group in a wound state, partially unwound.
FIG. 2B is an enlarged cross-sectional view showing the end portion on the outer circumferential side of the electrode group shown in FIG. 2A in the longitudinal direction of the electrode group.
FIG. 3A is a cross-sectional view showing the electrode group in a wound state and the position of a positive electrode lead portion.
FIG. 3B is an enlarged cross-sectional view schematically showing the positive electrode lead portion shown in FIG. 3A.

### DESCRIPTION OF EMBODIMENTS

### (Findings underlying the present disclosure)

In a lithium-ion secondary battery, which is an example of a nonaqueous electrolyte secondary battery, to cause Li ions deintercalated from the positive electrode to either react with the negative electrode active material or be intercalated into the negative electrode active material, the area of the negative electrode active material layer is designed to be larger than the area of the positive electrode active material layer. For example, in a state where the positive electrode and the negative electrode are stacked with a separator therebetween, when the positive electrode mixture layer surface protrudes from the outer edge of the negative electrode active material layer surface, lithium deposition occurs on the negative electrode at the portion where the positive electrode protrudes.

When the area of the negative electrode active material layer is larger than the area of the positive electrode active material layer, a step corresponding to the thickness of the positive electrode is generated in the electrode group, between the region where the negative electrode active material layer faces the positive electrode active material layer and the region where the negative electrode active material does not face the positive electrode active material layer. Here, in a negative electrode using, for example, a Si-based active material as the negative electrode active material, the expansion of the Si-based active material is large and stress is concentrated at the above step portion. If foreign matter becomes mixed into such a step portion and passes through the separator, an internal short circuit occurs. Note that an example of foreign matter that can become mixed is foreign matter derived from components (e.g., metal components) of parts (e.g., metal parts or metal jigs) of manufacturing devices, and such foreign matter is very infrequently generated from the above parts due to wear or the like during the manufacturing process. Another example of foreign matter that can become mixed is foreign matter that very infrequently adheres to battery parts.

According to the battery disclosed in Patent Literature 1, in the electrode group having a wound structure, an insulating tape is adhered to the negative electrode, specifically to a portion facing the positive electrode in an exposed portion of the negative electrode core extending from the end portion of the portion coated with the negative electrode active material. In other words, the insulating tape is disposed at a position corresponding to the above step portion. However, the present inventor has newly found that even when an insulating tape is disposed at the above step portion, the expansion of the negative electrode causes an issue as follows. The expansion of the negative electrode tends to cause misalignment at the above step portion between the positive electrode and the negative electrode. Even in a state where foreign matter is mixed in this step portion and the insulating tape capturing the foreign matter suppresses internal short circuits due to the foreign matter, when the expansion of the negative electrode causes misalignment at this step portion between the positive electrode and the negative electrode, the captured foreign matter slips off the insulating tape. This makes it difficult to prevent internal short circuits due to foreign matter. This issue is particularly pronounced in negative electrodes with large expansion, such as negative electrodes containing a Si-based active material.

In the battery disclosed in Patent Literature 2 as well, in the electrode group having a wound structure, a composite material tape that is an electrode thermal-insulating sheet is disposed at a position corresponding to the above step portion. However, as in the battery disclosed in Patent Literature 1, when foreign matter becomes mixed into the above step portion and electrode expansion or the like causes misalignment between the electrodes, it is difficult to prevent internal short circuits due to the foreign matter by using the above composite material tape.

Therefore, there is a demand for a technique to reduce the probability of internal short circuits due to foreign matter mixed, in a portion of the electrode group where stress is concentrated, as in the above step portion. Furthermore, even with a technique that can reduce the probability of internal short circuits due to foreign matter, if this technique causes lithium deposition on the negative electrode, battery performance itself deteriorates. Therefore, a technique is required that can reduce the probability of internal short circuits due to foreign matter and can also suppress the occurrence of lithium deposition.

Based on the above findings, the present inventor has conducted intensive research, and as a result, conceived of a nonaqueous electrolyte secondary battery of the present disclosure that can reduce, in a portion of the electrode group having a wound structure where stress is concentrated, the probability of internal short circuits due to foreign matter mixed in the electrode group, and can also suppress metal deposition on the negative electrode.

A nonaqueous electrolyte secondary battery of the present disclosure includes: an electrode group including a positive electrode, a negative electrode, and a separator disposed between the positive electrode and the negative electrode, the electrode group having a wound structure; and a nonaqueous electrolyte. The negative electrode includes a negative electrode current collector and a negative electrode active material layer. The electrode group satisfies at least one configuration selected from the group consisting of the following (A) and (B):
(A) the electrode group further includes an insulating protective tape at at least one end portion of the negative electrode in a longitudinal direction of the negative electrode, the insulating protective tape being adhered to a region extending from a face of the negative electrode active material layer facing the separator to an exposed portion of the negative electrode current collector via an end face of the negative electrode active material layer; and
(B) the electrode group further includes an insulating protective tape in a region of the negative electrode facing a positive electrode lead portion of the positive electrode, the insulating protective tape being adhered to the face of the negative electrode active material layer facing the separator.

The substrate of the above protective tape is a microporous resin-based membrane that has a compression deformation ratio of 30% or more and 50% or less when a load of 50 kg/cm² is applied thereto. Here, the compression deformation ratio when a load of 50 kg/cm² is applied is determined by measuring the change in thickness when a load of 50 kg/cm² is applied to the substrate of the protective tape, using, for example, a universal testing machine. In other words, the compression deformation ratio can be determined by the following formula: Compression deformation ratio (%) = {[(Thickness before compression) - (Thickness after compression)]/(Thickness before compression)} × 100.

In the nonaqueous electrolyte secondary battery of the present disclosure, a protective tape having such a property as described above is provided in at least one region selected from the group consisting of the region specified in (A) above and the region specified in (B) above. The region specified in (A) above and the region specified in (B) above are each a portion of the electrode group where stress is concentrated. With this configuration, the nonaqueous electrolyte secondary battery of the present disclosure can reduce, in a portion of the electrode group where stress is concentrated, the probability of internal short circuits due to foreign matter mixed in the electrode group, and can also suppress metal deposition on the negative electrode.

Embodiments of the present disclosure are described below with reference to the drawings. The present disclosure is not limited to the following embodiments.

### (Embodiment 1)

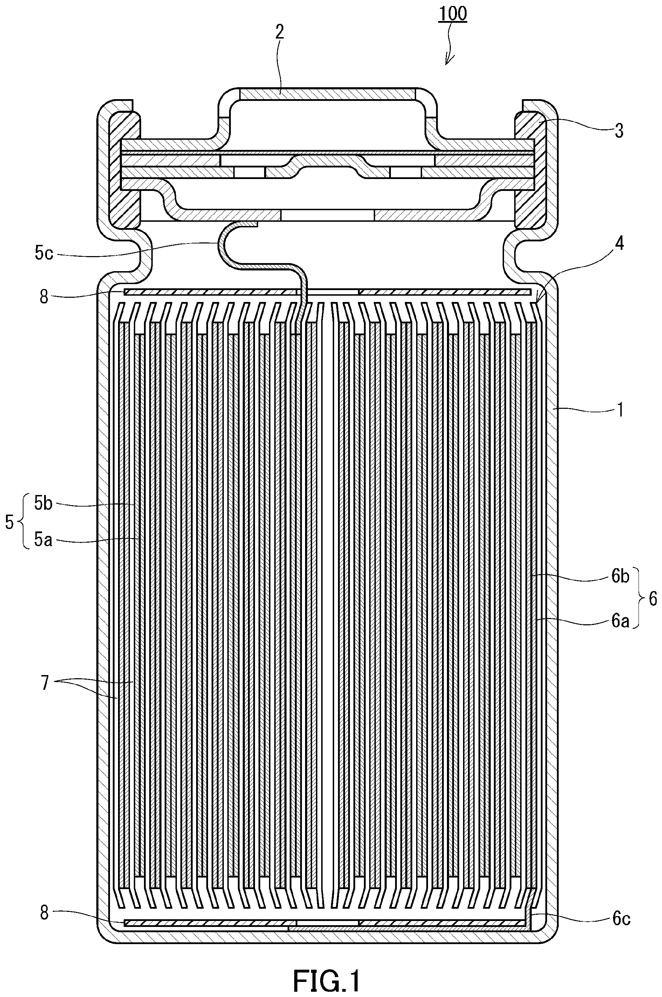

FIG. 1 is a cross-sectional view of a nonaqueous electrolyte secondary battery according to Embodiment 1 of the present disclosure. Here, a lithium-ion secondary battery is used as an example to describe the nonaqueous electrolyte secondary battery of the present disclosure.

A lithium-ion secondary battery 100 includes a container 1 and an electrode group 4. The electrode group 4 is housed in the container 1. The electrode group 4 has a wound structure. The electrode group 4 includes a positive electrode 5, a negative electrode 6, and a pair of separators 7. In other words, the electrode group 4 is formed by stacking the positive electrode 5 and the negative electrode 6 with the separator 7 disposed between the positive electrode 5 and the negative electrode 6, and winding the resulting stack in a spiral form. The electrode group 4 is impregnated with an electrolyte solution that is a nonaqueous electrolyte. The opening of the container 1 is closed with a sealing plate 2. The positive electrode 5 includes a positive electrode current collector 5a and a positive electrode active material layer 5b. To the positive electrode 5, one end of a positive electrode lead 5c is connected. The other end of the positive electrode lead 5c is connected to the back face of the sealing plate 2. An insulating packing 3 is disposed to surround the sealing plate 2. The negative electrode 6 includes a negative electrode current collector 6a and a negative electrode active material layer 6b. To the negative electrode 6, one end of a negative electrode lead 6c is connected. The other end of the negative electrode lead 6c is connected to the bottom surface of the container 1. An insulating ring 8 is disposed on each of the upper and lower surfaces of the electrode group 4.

In the present embodiment, the container 1 has a negative electrode polarity and the sealing plate 2 has a positive electrode polarity. Alternatively, a configuration may be employed in which the container 1 has a positive electrode polarity and the sealing plate 2 has a negative electrode polarity.

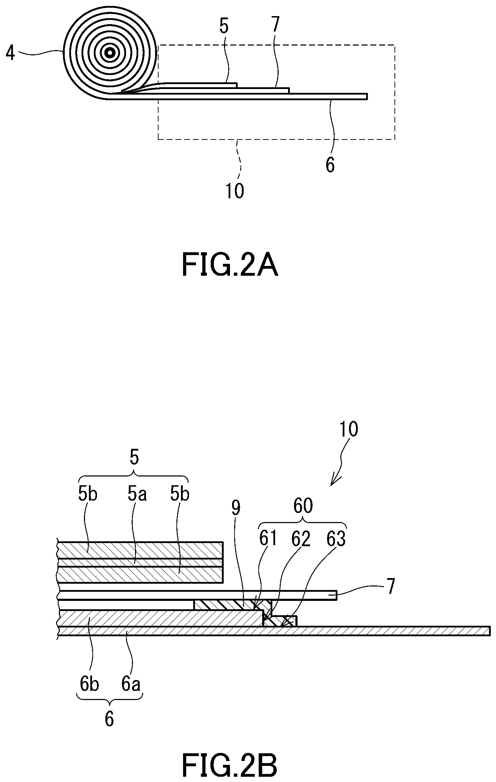

FIG. 2A is a cross-sectional view showing the electrode group 4 in a wound state, partially unwound. FIG. 2B is an enlarged cross-sectional view showing an end portion 10 on the outer circumferential side of the electrode group 4 shown in FIG. 2A in the longitudinal direction of the electrode group 4. Note that the longitudinal direction of the electrode group 4 corresponds to the direction along the winding direction of the electrode group 4. The same applies to the longitudinal direction of the negative electrode 6 below.

As shown in FIGS. 2A and 2B, in the lithium-ion secondary battery 100 of the present embodiment, the electrode group 4 further includes an insulating protective tape 9 at at least one end portion 10 of the negative electrode 6 in the longitudinal direction of the negative electrode 6. The insulating protective tape 9 is adhered to a region 60 extending from a face 61 of the negative electrode active material layer 6b facing the separator 7 to an exposed portion 63 of the negative electrode current collector 6a via an end face 62 of the negative electrode active material layer 6b. In the configuration example shown here, the protective tape 9 is provided at the end portion of the negative electrode 6 on the outer circumferential side of the wound electrode group 4, as at least one end portion of the negative electrode 6 in the longitudinal direction of the negative electrode 6. The protective tape 9 may be provided at the end portion of the negative electrode 6 on the inner circumferential side in the longitudinal direction of the negative electrode 6.

The protective tape 9 includes a substrate. The substrate of the protective tape is a microporous resin-based membrane that has a compression deformation ratio of 30% or more and 50% or less when a load of 50 kg/cm² is applied thereto. The compression deformation ratio of the substrate of the protective tape 9 can be achieved within the range of 30% or more and 50% or less, for example, by adjusting the material of the substrate, the porosity of the substrate, the pore size distribution of the substrate, the thickness of the substrate, the molecular weight of the substrate, the mechanical properties (such as compressive deformation yield stress) of the substrate, etc.

In the lithium-ion secondary battery 100 of the present embodiment, for example, to cause Li ions deintercalated from the positive electrode active material of the positive electrode 5 to either react with the negative electrode active material or be intercalated into the negative electrode active material, the area of the negative electrode active material layer 6b is designed to be larger than the area of the positive electrode active material layer 5b. Consequently, at the end portion 10 of the electrode group 4, a step corresponding to the thickness of the positive electrode 5 is generated between the region where the negative electrode active material layer 6b faces the positive electrode active material layer 5b and the region where the negative electrode active material layer 6b does not face the positive electrode active material layer 5b. The region 60, extending from the face 61 of the negative electrode active material layer 6b facing the separator 7 to the exposed portion 63 of the negative electrode current collector 6a via the end face 62 of the negative electrode active material layer 6b, is the above step portion. Thus, the region 60 corresponds to a portion of the electrode group where stress is concentrated. In the region 60 as above, the protective tape 9 including the substrate having a compression deformation ratio of 30% or more and 50% or less is disposed. With this configuration, even if foreign matter is mixed in this step portion and the expansion of the negative electrode 6 causes misalignment at this step portion between the positive electrode 5 and the negative electrode 6, the foreign matter once captured by the protective tape 9 can remain on the protective tape 9 while being partially embedded therein, thereby suppressing the movement of the foreign matter. Therefore, the lithium-ion secondary battery 100 of the present embodiment can reduce, in a portion of the electrode group 4 where stress is concentrated, the probability of internal short circuits due to foreign matter mixed in the electrode group 4.

Furthermore, the substrate of the protective tape 9 is a microporous resin-based membrane, as described above. The protective tape 9 thus has ion permeability. The protective tape 9 does not hinder the migration of lithium ions to the negative electrode active material layer 6b, and therefore can suppress the occurrence of lithium deposition on and near the portion of the negative electrode 6 to which the protective tape 9 is adhered.

The protective tape 9 may be formed solely from the above substrate. In this case, the protective tape 9 can be adhered to the region 60 of the negative electrode 6 by heating and pressing or by heating. In another example, the protective tape 9 may further include an adhesive layer provided on at least one face of the above substrate. This configuration makes the installation of the protective tape easier. The adhesive layer may be provided on one or both faces of the substrate. The adhesive contained in the adhesive layer is selected, for example, from adhesives that swell in an electrolyte solution and thus exhibit ion permeability. The adhesive contained in the adhesive layer can be, for example, an acrylic adhesive, a rubber adhesive, or a silicone adhesive.

The microporous resin-based membrane may be, for example, a microporous membrane made of a polyolefin resin. Using a microporous membrane made of a polyolefin resin as the substrate enables the protective tape 9 to have excellent ion permeability. Therefore, the occurrence of lithium deposition on the negative electrode 6 can be more reliably suppressed. Furthermore, the microporous membrane made of a polyolefin resin can easily achieve a compression deformation ratio of 30% or more and 50% or less.

The microporous resin-based membrane may include at least one selected from the group consisting of a polyphenylene sulfide (PPS) and a polyimide (PI). Using at least one selected from the group consisting of a PPS and a PI as a material of the substrate of the protective tape 9 can impart excellent protection against foreign matter. Furthermore, a microporous membrane of at least one selected from the group consisting of a PPS and a PI can easily achieve a substrate having a compression deformation ratio of 30% or more and 50% or less.

The protective tape 9 may further include a porous layer disposed on the substrate and including an inorganic material. Providing, on the substrate, a porous layer including an inorganic material improves the heat resistance of the protective tape 9. Consequently, it is possible to suppress the spread of an internal short circuit point due to heat generation.

The thickness of the protective tape 9 is, for example, 10 µm or more and 100 µm or less. With this configuration, it is possible to further reduce the probability of the occurrence of internal short circuits due to foreign matter while more reliably suppressing the occurrence of lithium deposition on the negative electrode 6.

The compression deformation ratio of the substrate of the protective tape 9 may be greater than the compression deformation ratio of the separator 7 when a load of 50 kg/cm² is applied thereto. With this configuration, it is possible to more reliably suppress the movement of foreign matter when the negative electrode expands, thereby further reducing the probability of the occurrence of internal short circuits.

The microporous resin-based membrane can be a microporous membrane having an average pore diameter of approximately 0.01 µm to approximately 1 µm. This can reduce the probability of the occurrence of internal short circuits due to foreign matter. The average pore diameter of the microporous membrane is the median diameter obtained from the pore size distribution determined by measuring the pore distribution using a mercury porosimeter. The median diameter refers to the pore diameter at a cumulative volume equal to 50% in the volumetric pore distribution.

The constituent elements other than the protective tape 9 are described below in detail.

The positive electrode current collector 5a can be a sheet or film formed of a metal material such as aluminum, stainless steel, titanium, or an alloy of any of these. Aluminum and alloys thereof are inexpensive and can be easily formed into thin films and are accordingly suitable as materials of the positive electrode current collector 5a. The sheet or film may be porous or non-porous. The sheet or film is metal foil, metal mesh, or the like. The surface of the positive electrode current collector 5a may be coated with a carbon material, such as carbon, serving as a conductive auxiliary material.

The positive electrode active material included in the positive electrode active material layer 5b may be any material capable of reversibly occluding and releasing lithium ions. Typically, a lithium-containing transition metal compound can be used as the positive electrode active material. Examples of lithium-containing transition metal compounds include composite oxides containing at least one element selected from the group consisting of cobalt, manganese, nickel, chromium, iron, and vanadium, and containing lithium. Specific examples of such composite oxides include LiCoO₂, LiMnO₂, LiNiO₂, LiNiₓM₍₁₋ₓ₎O₂ (M includes at least one selected from the group consisting of Co, Mn, Fe, Mg, Ti, and Al, and x satisfies 0.3 ≤ x ≤ 0.95), LiCrO₂, αLiFeO₂, and LiVO₂.

The positive electrode active material layer 5b may include other materials such as a conductive additive, an ion conductor, or a binder.

A conductive additive and an ion conductor are used to reduce the resistance of the positive electrode 5. Examples of conductive additives include carbon materials and conductive polymer compounds. Examples of carbon materials include carbon black, graphite, acetylene black, carbon nanotubes, carbon nanofibers, graphene, fullerenes, and graphite oxide. Examples of conductive polymer compounds include polyaniline, polypyrrole, and polythiophene. Examples of ion conductors include gel electrolytes, organic solid electrolytes, and inorganic solid electrolytes. Examples of gel electrolytes include polymethyl methacrylate and polymethacrylic acid methyl ester. Examples of organic solid electrolytes include polyethylene oxide. Examples of inorganic solid electrolytes include Li₇La₃Zr₂O₁₂.

A binder is used to improve the binding properties of the materials of the positive electrode 5. The binder can be a polymer material, such as polyvinylidene fluoride, a vinylidene fluoride-hexafluoropropylene copolymer, a vinylidene fluoride-tetrafluoroethylene copolymer, polytetrafluoroethylene, carboxymethyl cellulose, polyacrylic acid, styrene-butadiene copolymer rubber, polypropylene, polyethylene, or polyimide.

The negative electrode current collector 6a can be a sheet or film formed of a metal material such as stainless steel, nickel, copper, or an alloy of any of these. The sheet or film may be porous or non-porous. The sheet or film is metal foil, metal mesh, or the like. The surface of the negative electrode current collector 6a may be coated with a carbon material, such as carbon, serving as a conductive auxiliary material.

The negative electrode active material included in the negative electrode active material layer 6b may be any material capable of reversibly occluding and releasing lithium ions. Typically, a carbon material containing graphite with a graphite-type crystal structure can be used as the negative electrode active material. Examples of such a carbon material include natural graphite, spherical or fibrous artificial graphite, non-graphitizable carbon (hard carbon), and graphitizable carbon (soft carbon). Examples of materials other than carbon materials include lithium titanate. Furthermore, from the viewpoint of enhancing the energy density of the lithium-ion battery 100, high-capacity materials such as silicon, tin, silicon alloys, tin alloys, silicon oxide, silicon nitride, tin oxide, and composite materials of silicon and carbon can also be suitably used as the negative electrode active material.

The negative electrode active material layer 6b may include, as the negative electrode active material, at least one selected from the group consisting of graphite and silicon. The negative electrode active material layer 6b may include only graphite as the negative electrode active material. Graphite is recommended because graphite is less susceptible to deterioration even after repeated charge and discharge at deep depths. A carbon material other than graphite may be used as the negative electrode active material. Silicon exhibits higher capacity than graphite and is accordingly advantageous for increasing the capacity of the lithium-ion secondary battery 100.

In the present embodiment, the negative electrode active material layer 6b may include a Si-based active material as the negative electrode active material. A Si-based active material is an active material containing Si element. Examples of Si-based active materials include a simple substance of Si, Si alloys, Si-containing compounds, Si-containing compositions, and composites of Si and carbon. Examples of Si-containing compositions include a composition in which Si particles are dispersed in a lithium silicate phase containing Li₂Si₂O₅ as the main component (LiₓSi_{y}O_{z} (x > 0, y > 0, z > 0)). In a negative electrode including a Si-based active material as the negative electrode active material, the expansion of the Si-based active material is large. Consequently, stress tends to be concentrated at the above step portion and internal short circuits due to foreign matter mixed also tend to occur. However, the protective tape 9 of the present embodiment can reduce the probability of internal short circuits while suppressing metal deposition on the negative electrode 6. In other words, the configuration of the present disclosure can effectively reduce the probability of internal short circuits due to foreign matter even when the negative electrode is prone to expansion.

The negative electrode active material layer 6b may include a conductive additive, an ion conductor, a binder, or the like. The same materials that can be used as a conductive additive, an ion conductor, and a binder in the positive electrode active material layer 5b can be used in the negative electrode active material layer 6b.

The separator 7 has lithium-ion permeability. The material of the separator 7 may be any material through which lithium ions are allowed to pass. The material of the separator 7 can be at least one selected from the group consisting of a gel electrolyte, an ion exchange resin membrane, a semipermeable membrane, and a porous membrane. In the case where the separator 7 is formed of any of these materials, the safety of the lithium-ion secondary battery 100 can be sufficiently ensured. Examples of the gel electrolyte include gel electrolytes containing a fluororesin, such as PVdF. Examples of the ion exchange resin membrane include cation exchange membranes and anion exchange membranes. Examples of the porous membrane include porous membranes made of a polyolefin resin and porous membranes containing glass paper obtained by weaving glass fibers into a nonwoven fabric.

The electrolyte solution is a nonaqueous electrolyte with which the positive electrode 5, the negative electrode 6, and the separator 7 are impregnated. The electrolyte solution may fill the interior space of the container 1. The action of the electrolyte solution enables lithium ions to move between the positive electrode 5 and the negative electrode 6.

The electrolyte solution contains a nonaqueous solvent and a lithium salt.

Examples of the nonaqueous solvent include a cyclic carbonate solvent, a chain carbonate solvent, a cyclic ether solvent, a chain ether solvent, a cyclic ester solvent, a chain ester solvent, and a fluorinated solvent. Examples of cyclic carbonate solvents include ethylene carbonate, propylene carbonate, and butylene carbonate. Examples of chain carbonate solvents include dimethyl carbonate, ethyl methyl carbonate, and diethyl carbonate. Examples of cyclic ether solvents include tetrahydrofuran, 1,4-dioxane, and 1,3-dioxolane. Examples of chain ether solvents include 1,2-dimethoxyethane and 1,2-diethoxyethane. Examples of cyclic ester solvents include γ-butyrolactone. Examples of chain ester solvents include methyl acetate. Examples of fluorinated solvents include fluoroethylene carbonate, methyl fluoropropionate, fluorobenzene, fluoroethylmethyl carbonate, and fluorodimethylene carbonate. One nonaqueous solvent selected from the above may be used alone. Alternatively, a mixture of two or more nonaqueous solvents selected from the above may be used.

Examples of the lithium salt include lithium hexafluorophosphate (LiPF₆), lithium tetrafluoroborate (LiBF₄), lithium perchlorate (LiClO₄), lithium bis(fluorosulfonyl)imide (LiFSI), lithium bis(trifluoromethanesulfonyl)imide (LiTFSI), lithium bisperfluoroethylsulfonyl imide (LiN(SO₂C₂F₅)₂), LiAsF₆, LiCF₃SO₃, and lithium difluoro(oxalato)borate. One selected from the above lithium salts may be used, or a combination of two or more selected from the above lithium salts may be used.

The container 1 is, for example, a container made of a metal such as aluminum or stainless steel. The container 1 may have a cylindrical shape or a prismatic shape.

The electrode group 4 may be wound in a cylindrical shape or an elliptical shape.

The lithium-ion secondary battery 100 is not limited to any particular shape. Various shapes such as cylindrical and prismatic shapes can be employed as the shape of the lithium-ion secondary battery 100.

Next, a manufacturing method for the lithium-ion secondary battery 100 is described.

First, the electrode group 4 is produced. Specifically, the positive electrode 5, the negative electrode 6, the separator 7, and the protective tape 9 are each prepared. The protective tape 9 is adhered to a given position of the negative electrode 6. For example, as shown in FIG. 2B, in the case where the protective tape 9 is to be disposed at the end portion of the negative electrode 6 on the outer circumferential side in the longitudinal direction of the negative electrode 6, specifically at a position representing the region extending from the face of the negative electrode active material layer facing the separator to the exposed portion of the negative electrode current collector via the end face of the negative electrode active material layer, the protective tape 9 is adhered to that position. Next, the positive electrode 5, the negative electrode 6, and the pair of separators 7 are stacked and wound so as to form the electrode group 4 wound in a spiral form. Thus, the electrode group 4 is obtained.

The positive electrode 5 can be produced by applying a positive electrode mixture to one or both faces of the positive electrode current collector 5a, followed by drying and rolling. The positive electrode 5 has a thickness of, for example, 30 µm to 200 µm and is desirably rich in flexibility. The positive electrode mixture is obtained by kneading and uniformly dispersing materials such as a positive electrode active material, a binder, and a conductive material with a dispersion medium.

The method for applying the positive electrode mixture to the positive electrode current collector 5a is not limited to any particular method. A slit die coater, a reverse roll coater, a lip coater, a blade coater, a knife coater, a gravure coater, a dip coater, or the like can be used to apply the positive electrode mixture in the form of slurry to the positive electrode current collector 5a. The applied positive electrode mixture may be dried naturally or with a dryer.

After the drying, the positive electrode 5 is subjected to rolling so that the positive electrode active material layer 5b has a given thickness. The rolling may be performed multiple times using a roll press machine, and may be performed multiple times while varying the press pressure exerted by a roll press machine. After the rolling, the positive electrode lead 5c for electric power extraction is welded to the positive electrode current collector 5a.

The negative electrode 6 can be produced by applying a negative electrode mixture to one or both faces of the negative electrode current collector 6a, followed by drying and rolling. The negative electrode 6 has a thickness of, for example, 30 µm to 210 µm and is desirably rich in flexibility. The negative electrode mixture is obtained by kneading and uniformly dispersing materials such as a negative electrode active material, a binder, and a conductive material with a dispersion medium.

Instead of the wet method described above, a dry method may be employed as a method for producing the negative electrode 6. Examples of dry film-forming methods include vapor deposition, sputtering, and chemical vapor deposition (CVD) methods. All of these methods can be performed under vacuum. A vapor deposition method is desirable from the viewpoint of efficiently forming the negative electrode active material layer 6b. Both electron beam vapor deposition and resistance heating vapor deposition can be employed as the vapor deposition method. In the case where vapor deposition of an oxide, a nitride, or an oxynitride is performed, an oxide and/or a nitride can be used as an evaporation material. Reactive deposition may be performed by evaporating a negative electrode active material, such as silicon or tin, from an evaporation source, while introducing oxygen gas, nitrogen gas, or ions or radicals containing the constituent elements of these gases into the space between the negative electrode current collector 6a and the evaporation source.

Next, the electrode group 4 is placed in the container 1, and then the electrolyte solution is injected into the container 1. Finally, the container 1 is sealed.

Through the above processes, the lithium-ion secondary battery 100 shown in FIG. 1 is obtained.

### (Embodiment 2)

A lithium-ion secondary battery that is a nonaqueous electrolyte secondary battery according to Embodiment 2 of the present disclosure differs from the lithium-ion secondary battery according to Embodiment 1 in terms of the position at which the protective tape is provided, but is the same as the lithium-ion secondary battery according to Embodiment 1 in terms of all other configurations. Accordingly, in the present embodiment, only the position at which the protective tape is provided is described.

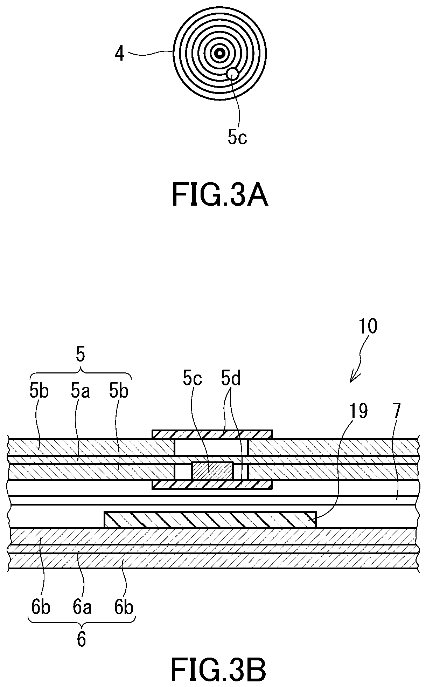

FIG. 3A is a cross-sectional view showing the electrode group 4 in a wound state and the position of a positive electrode lead portion. FIG. 3B is an enlarged cross-sectional view schematically showing the positive electrode lead portion shown in FIG. 3A.

As shown in FIGS. 3A and 3B, in the lithium-ion secondary battery of the present embodiment, the electrode group 4 further includes an insulating protective tape 19 in a region of the negative electrode 6 facing a positive electrode lead portion of the positive electrode 5. The insulating protective tape 19 is adhered to the face of the negative electrode active material layer 6b facing the separator 7. Here, the positive electrode lead portion refers to a portion of the positive electrode 5 that includes the portion to which the positive electrode lead 5c is connected and its vicinity. The positive electrode lead 5c is protected by a lead protective tape 5d.

The protective tape 19 can have the same property and structure as the property and structure of the protective tape 9 described in Embodiment 1. In other words, the substrate of the protective tape 19 is a microporous resin-based membrane that has a compression deformation ratio of 30% or more and 50% or less when a load of 50 kg/cm² is applied thereto. In the positive electrode lead portion, the positive electrode current collector 5a is exposed to be connected to the positive electrode lead 5c. Consequently, the positive electrode lead portion includes a portion where the positive electrode active material layer 5b is not provided. Thus, the positive electrode lead portion includes a region where the negative electrode active material layer 6b faces the positive electrode active material layer 5b and a region where the negative electrode active material layer 6b does not face the positive electrode active material layer 5b, generating a step between these regions in the electrode group 4. In other words, the positive electrode lead portion is a step portion and corresponds to a portion of the electrode group 4 where stress is concentrated. In the present embodiment, in the region of the negative electrode 6 facing the positive electrode lead portion of the positive electrode 5, the protective tape 19 including the substrate having a compression deformation ratio of 30% or more and 50% or less is disposed. With this configuration, even if foreign matter is mixed in this step portion and the expansion of the negative electrode 6 causes misalignment at this step portion between the positive electrode 5 and the negative electrode 6, the foreign matter once captured by the protective tape 19 can remain on the protective tape 19 while being partially embedded therein, thereby suppressing the movement of the foreign matter. Therefore, the lithium-ion secondary battery of the present embodiment can reduce, in a portion of the electrode group 4 where stress is concentrated, the probability of internal short circuits due to foreign matter mixed in the electrode group 4.

Furthermore, the substrate of the protective tape 19 is a microporous resin-based membrane, similar to the substrate of the protective tape 9. The protective tape 19 thus has ion permeability. The protective tape 19 does not hinder the migration of lithium ions to the negative electrode active material layer 6b, and therefore can suppress the occurrence of lithium deposition on and near the portion of the negative electrode 6 to which the protective tape 19 is adhered.

The lithium-ion secondary battery of the present embodiment may further include the protective tape 9 in addition to the protective tape 19. In other words, the protective tape 9 according to Embodiment 1 may be further applied to the lithium-ion secondary battery according to Embodiment 2. In this case, the probability of internal short circuits due to foreign matter mixed in the electrode group 4 can be even further reduced. In the case where both the protective tape 19 and the protective tape 9 are provided, the protective tape 19 and the protective tape 9 may be the same in terms of material and/or configuration, or may be different from each other in terms of material and/or configuration.

### (Other embodiments)

### (Supplementary description)

The description of the embodiments above discloses the following techniques.

### (Technique 1)

A nonaqueous electrolyte secondary battery including:
an electrode group including a positive electrode, a negative electrode, and a separator disposed between the positive electrode and the negative electrode, the electrode group having a wound structure; and
a nonaqueous electrolyte, wherein
the negative electrode includes a negative electrode current collector and a negative electrode active material layer,
the electrode group satisfies at least one configuration selected from the group consisting of the following (A) and (B):
   (A) the electrode group further includes an insulating protective tape at at least one end portion of the negative electrode in a longitudinal direction of the negative electrode, the insulating protective tape being adhered to a region extending from a face of the negative electrode active material layer facing the separator to an exposed portion of the negative electrode current collector via an end face of the negative electrode active material layer; and
   (B) the electrode group further includes an insulating protective tape in a region of the negative electrode facing a positive electrode lead portion of the positive electrode, the insulating protective tape being adhered to the face of the negative electrode active material layer facing the separator, and
a substrate of the protective tape is a microporous resin-based membrane that has a compression deformation ratio of 30% or more and 50% or less when a load of 50 kg/cm² is applied thereto.

With this configuration, the nonaqueous electrolyte secondary battery according to Technique 1 can reduce, in a portion of the electrode group where stress is concentrated, the probability of internal short circuits due to foreign matter mixed in the electrode group, and can also suppress metal deposition on the negative electrode.

### (Technique 2)

The nonaqueous electrolyte secondary battery according to Technique 1, wherein the microporous resin-based membrane is a microporous membrane made of a polyolefin resin. Using a microporous membrane made of a polyolefin resin as the substrate enables the protective tape to have excellent ion permeability. Therefore, the occurrence of lithium deposition on the negative electrode can be more reliably suppressed. Furthermore, the microporous membrane made of a polyolefin resin can easily achieve a compression deformation ratio of 30% or more and 50% or less.

### (Technique 3)

The nonaqueous electrolyte secondary battery according to Technique 1 or 2, wherein the microporous resin-based membrane includes at least one selected from the group consisting of a PPS and a PI. Using at least one selected from the group consisting of a PPS and a PI as a material of the substrate of the protective tape can impart excellent protection against foreign matter. Furthermore, a microporous membrane of at least one selected from the group consisting of a PPS and a PI can easily achieve a substrate having a compression deformation ratio of 30% or more and 50% or less.

### (Technique 4)

The nonaqueous electrolyte secondary battery according to any one of Techniques 1 to 3, wherein the protective tape further includes a porous layer disposed on the substrate and including an inorganic material. Providing, on the substrate, a porous layer including an inorganic material improves the heat resistance of the protective tape. Consequently, it is possible to suppress the spread of an internal short circuit point due to heat generation.

### (Technique 5)

The nonaqueous electrolyte secondary battery according to any one of Techniques 1 to 4, wherein the negative electrode active material layer includes a Si-based active material as a negative electrode active material. In a negative electrode including a Si-based active material as the negative electrode active material, the expansion of the Si-based active material is large. Consequently, stress tends to be concentrated at a step portion of the electrode group and internal short circuits due to foreign matter mixed also tend to occur. However, the protective tape according to Technique 5 can reduce the probability of internal short circuits while suppressing metal deposition on the negative electrode. In other words, the configuration according to Technique 5 can effectively reduce the probability of internal short circuits due to foreign matter even when the negative electrode is prone to expansion.

### (Technique 6)

The nonaqueous electrolyte secondary battery according to any one of Techniques 1 to 5, wherein the protective tape further includes an adhesive layer provided on at least one face of the substrate. This configuration makes the installation of the protective tape easier.

### Examples

### (Example 1)

### [Compression deformation ratio of substrate of protective tape]

A microporous membrane, serving as the substrate of the protective tape, was produced by the method described below. High-density polyethylene having a viscosity average molecular weight of 400,000 and liquid paraffin (having a kinematic viscosity of 7.59 × 10⁻⁵ m²/s at 37.8°C) were mixed at a mass ratio of 4:6 and melt-kneaded at 200°C. The resulting kneaded product was subsequently extruded to form a sheet with a thickness of 1 mm. The sheet was stretched 7 × 7 times using a simultaneous biaxial stretching machine, and then immersed in methylene chloride to remove the liquid paraffin by extraction to produce a microporous membrane. The microporous membrane was then stretched in the transverse direction using a tenter stretching machine. By setting the stretch ratio to 1.3 at this time, a microporous membrane with high porosity and excellent compressibility was obtained. The compression deformation ratio of the substrate was determined as follows, using a testing machine that conforms to JIS K 7181. The substrate was cut into 10 pieces of a size of 3 cm × 3 cm as a measurement sample, and these 10 pieces were stacked in the thickness direction and placed on a compression jig having a diameter of 15 mm. Next, the measurement sample was compressed in the thickness direction at a rate of 1 mm/min, and the change in thickness at a compressive stress of 50 kg/cm² was measured to determine the compression deformation ratio. The result was 30%, as shown in Table 1.

[Check for presence or absence of embedding of metal particle in substrate of protective tape and for insulation between metal particle and negative electrode]

The negative electrode was produced as follows. The graphite used was carbon-coated spheroidized natural graphite. The Si-based active material used was a Si-containing composition (composition in which Si particles are dispersed in a lithium silicate phase containing Li₂Si₂O₅ as the main component (LiₓSi_{y}O_{z} composition)). These graphite and Si-based active material were mixed at a mass ratio of 80:20 (graphite:Si-based active material). To the resulting mixture, carboxymethyl cellulose (CMC), styrene-butadiene rubber (SBR), and polyacrylic acid (PAA) were added as binders to produce an aqueous slurry. The aqueous slurry obtained was applied to both faces of a copper foil having a thickness of 10 µm and dried to obtain a sheet-like body. Subsequently, the sheet-like body obtained was rolled to have a thickness of 120 µm and this was used as the negative electrode.

A protective tape was adhered to the above negative electrode. The protective tape was produced by forming an adhesive layer on one principal surface of the substrate (i.e., microporous membrane) of the protective tape produced by the method described above. This protective tape was adhered to the negative electrode using the adhesive layer. The adhesive layer was produced from an acrylic adhesive.

On the protective tape adhered to the negative electrode as above, a single metal particle of approximately 50 µm in diameter was placed, and a load of 50 kg/cm² was applied to the placement portion to check for the insulation between the metal particle and the negative electrode. The metal particle used was a spherical nickel particle. The load was subsequently released to check for the presence or absence of embedding of the metal particle in the substrate of the protective tape. The check for the insulation between the metal particle and the negative electrode was performed by pressing the metal particle with a metal-made indenter and measuring the resistance between the indenter and the negative electrode with a resistance meter to determine whether electrical conduction occurred therebetween. The check for embedding of the metal particle was performed by measuring unevenness around the metal particle using a laser microscope after the release of the load. A state in which 50% or more of the volume of the metal particle was embedded in the substrate was determined as embedding.

### [Production of test cell serving as battery and check for lithium deposition]

### (Production of negative electrode)

A load of 50 kg/cm² was applied to the protective tape in the thickness direction to compress the protective tape, and the protective tape was adhered to a given position of the negative electrode. The methods for producing the protective tape and the negative electrode are as described above. Here, the given position refers to a position that, when an electrode group having a wound structure is formed, represents a region at the end portion of the negative electrode on the outer circumferential side in the longitudinal direction of the negative electrode. This region extends from a face of the negative electrode active material layer facing the separator to an exposed portion of the negative electrode current collector via an end face of the negative electrode active material layer.

### (Production of positive electrode)

The positive electrode active material used was a lithium transition metal composite oxide represented by LiCo_{1/3}Mn_{1/3}Ni_{1/3}O₂. An amount of 98 parts by mass of the positive electrode active material, 1 part by mass of acetylene black, and 1 part by mass of polyvinylidene fluoride were mixed, and N-methyl-2-pyrrolidone (NMP) was used as a dispersion medium to prepare a positive electrode mixture slurry. Next, the positive electrode mixture slurry was applied to both faces of a positive electrode core made of aluminum foil, followed by drying and compression of the coating film. Afterward, the resultant was cut to a given electrode size to produce a positive electrode with positive electrode mixture layers formed on both faces of the positive electrode core. In the central portion of the positive electrode in the longitudinal direction thereof, an exposed portion was provided where the surface of the positive electrode core was exposed, and a positive electrode lead was welded to the exposed portion.

### (Preparation of nonaqueous electrolyte)

In a solvent mixture in which ethylene carbonate (EC) and ethyl methyl carbonate (EMC) were mixed at a mass ratio of 1:3 (EC:EMC), LiPF₆ was dissolved at a concentration of 1 mol/L to prepare an electrolyte solution serving as the nonaqueous electrolyte.

### (Production of test cell)

An aluminum-made lead was attached to the exposed portion of the positive electrode above, and a nickel-made lead was attached to a given position of the negative electrode. The positive electrode and the negative electrode were wound in a spiral form with a polyolefin-made separator disposed therebetween to produce a wound electrode group. The electrode group was housed in a bottomed cylindrical exterior can, the above nonaqueous electrolyte was injected thereinto, and then a sealing body was attached to the opening of the exterior can via a gasket to produce a cylindrical test cell.

### (Check for lithium deposition)

The test cell produced was subjected to charge and discharge cycles (4.2 V-2.5 V, charge at 0.5 C/discharge at 0.7 C). After 100 cycles, the test cell was disassembled to check for the presence or absence of lithium deposition on the portion of the negative electrode to which the protective tape was adhered. The result is shown in Table 1.

### (Example 2)

All the procedures for the battery production and tests were performed in the same manner as in Example 1, except for the use of a different protective tape. The protective tape used in Example 2 was produced in the same manner as in Example 1, except that the stretch ratio of the tenter stretching machine in the substrate production was set to 1.4. The test result for the compression deformation ratio of the substrate of the protective tape was 40%, as shown in Table 1.

### (Example 3)

All the procedures for the battery production and tests were performed in the same manner as in Example 1, except for the use of a different protective tape. The protective tape used in Example 3 was produced in the same manner as in Example 1, except that the stretch ratio of the tenter stretching machine in the substrate production was set to 1.5. The test result for the compression deformation ratio of the substrate of the protective tape was 50%, as shown in Table 1.

### (Comparative Example 1)

All the procedures for the battery production and tests were performed in the same manner as in Example 1, except for the use of a different protective tape. The protective tape used in Comparative Example 1 was produced in the same manner as in Example 1, except that the stretch ratio of the tenter stretching machine in the substrate production was set to 1.2. The test result for the compression deformation ratio of the substrate of the protective tape was 20%, as shown in Table 1.

### (Comparative Example 2)

All the procedures for the battery production and tests were performed in the same manner as in Example 1, except for the use of a different protective tape. The protective tape used in Comparative Example 2 was produced in the same manner as in Example 1, except that the stretch ratio of the tenter stretching machine in the substrate production was set to 1.6. The test result for the compression deformation ratio of the substrate of the protective tape was 60%, as shown in Table 1.

**[Table 1]**

| | Compression deformation ratio of substrate of protective tape (%) | Presence or absence of embedding of metal particle | Insulation between metal particle and negative electrode | Presence or absence of lithium deposition after 100 charge and discharge cycles |
|---|---|---|---|---|
| Example 1 | 30 | Presence | Presence | Absence |
| Example 2 | 40 | Presence | Presence | Absence |
| Example 3 | 50 | Presence | Presence | Absence |
| Comparative Example 1 | 20 | Absence | Presence | Absence |
| Comparative Example 2 | 60 | Presence | Presence | Presence |

As shown in Table 1, in Examples 1 to 3 in each of which a protective tape including a substrate with a compression deformation ratio of 30% or more and 50% or less was used, the metal particle was embedded in the substrate of the protective tape and the insulation between the metal particle and the negative electrode was also ensured, and lithium deposition did not occur after 100 charge and discharge cycles. Thus, the protective tapes of Examples 1 to 3 demonstrate that it is possible to provide a battery that can reduce the probability of internal short circuits due to foreign matter mixed in the electrode group, and can also suppress metal deposition on the negative electrode.

In contrast, in Comparative Example 1 in which a protective tape including a substrate with a compression deformation ratio of 20% was used, the metal particle was not embedded in the substrate of the protective tape. Consequently, the protective tape of Comparative Example 1 is considered to be incapable of significantly reducing the probability of internal short circuits due to foreign matter mixed in the electrode group. In Comparative Example 2 in which a protective tape including a substrate with a compression deformation ratio of 60% was used, lithium deposition occurred after 100 charge and discharge cycles. It is considered that this is because the protective tape of Comparative Example 2 had a high compression deformation ratio, and the pores were collapsed by compression during the production of the electrode group, resulting in low ion permeability.

The above results confirm that by installing, in a portion of an electrode group where stress is concentrated, a protective tape including a substrate that is a microporous resin-based membrane that has a compression deformation ratio of 30% or more and 50% or less when a load of 50 kg/cm² is applied thereto, the probability of internal short circuits due to foreign matter mixed in the electrode group can be reduced and metal deposition on the negative electrode can also be suppressed.

### INDUSTRIAL APPLICABILITY

The techniques of the present disclosure are useful for lithium-ion secondary batteries.

## Claims

1. A nonaqueous electrolyte secondary battery comprising:
an electrode group including a positive electrode, a negative electrode, and a separator disposed between the positive electrode and the negative electrode, the electrode group having a wound structure; and
a nonaqueous electrolyte, wherein
the negative electrode includes a negative electrode current collector and a negative electrode active material layer,
the electrode group satisfies at least one configuration selected from the group consisting of the following (A) and (B):
(A) the electrode group further includes an insulating protective tape at at least one end portion of the negative electrode in a longitudinal direction of the negative electrode, the insulating protective tape being adhered to a region extending from a face of the negative electrode active material layer facing the separator to an exposed portion of the negative electrode current collector via an end face of the negative electrode active material layer; and
(B) the electrode group further includes an insulating protective tape in a region of the negative electrode facing a positive electrode lead portion of the positive electrode, the insulating protective tape being adhered to the face of the negative electrode active material layer facing the separator, and
a substrate of the protective tape is a microporous resin-based membrane that has a compression deformation ratio of 30% or more and 50% or less when a load of 50 kg/cm² is applied thereto.

2. The nonaqueous electrolyte secondary battery according to claim 1, wherein
the microporous resin-based membrane is a microporous membrane made of a polyolefin resin.

3. The nonaqueous electrolyte secondary battery according to claim 1, wherein
the microporous resin-based membrane includes at least one selected from the group consisting of a polyphenylene sulfide and a polyimide.

4. The nonaqueous electrolyte secondary battery according to claim 1, wherein
the protective tape further includes a porous layer disposed on the substrate and including an inorganic material.

5. The nonaqueous electrolyte secondary battery according to claim 1, wherein
the negative electrode active material layer includes a Si-based active material as a negative electrode active material.

6. The nonaqueous electrolyte secondary battery according to claim 1, wherein
the protective tape further includes an adhesive layer provided on at least one face of the substrate.
